# FASCICULE DE BREVET EUROPEEN

(11) **EP 3 577 409 B1**
(45) Date de publication et mention de la délivrance du brevet: **19.04.2023**
(21) Numéro de dépôt: 18705701.3
(22) Date de dépôt: 31.01.2018
(51) Int. Cl.: F28F 9/02, F28F 19/00, B29C 45/14, B29C 65/70, F16J 15/00, F16J 15/02, F16J 15/06

(54) **ECHANGEUR DE CHALEUR COMPRENANT UN JOINT PRINCIPAL ET UN JOINT SECONDAIRE D'ETANCHEITE**
WÄRMETAUSCHER MIT EINER PRIMÄREN UND EINER SEKUNDÄREN DICHTUNG
HEAT EXCHANGER COMPRISING A MAIN AND A SECONDARY GASKET

(30) Priorité: 31.01.2017 FR 1750794
(43) Date de publication de la demande: 11.12.2019
(73) Titulaire: Valeo Systemes Thermiques, 78322 Le Mesnil Saint-Denis Cedex (FR)
(72) Inventeur: DAY, Alan, 51721 Reims (FR); CLERGEON, Sébastien, 28401 Nogent Le Rotrou (FR)
(74) Mandataire: Valeo Systèmes Thermiques
(86) Numéro de dépôt international: PCT/FR2018/050226
(87) Numéro de publication internationale: WO 2018/142068

(56) Documents cités:
- DE-A1-102015 207 010
- JP-A- H03 138 116
- JP-A- 2000 161 894
- US-A- 5 845 705

## Description

L'invention se rapporte aux échangeurs de chaleur, notamment dans le domaine automobile.

Les échangeurs de chaleur de véhicules automobiles comprennent généralement :
- au moins un conduit de circulation d'un fluide,
- un collecteur dans lequel débouche le conduit de circulation, le collecteur comprenant une plaque collectrice et une boite rapportée sur la plaque collectrice, et
- un joint principal d'étanchéité entre la boite et la plaque collectrice.

Dans de tels échangeurs de chaleur, le joint doit assurer une étanchéité satisfaisante pour éviter tout problème de fuite. En particulier, le joint doit permettre de prévenir des fuites depuis l'intérieur de l'échangeur de chaleur vers l'extérieur, ou inversement. Un échangeur de chaleur selon le préambule de la revendication 1 est connu du document US 5 845 705 A.

Toutefois, un inconvénient de ce type de joint est qu'il assure mal la fonction d'étanchéité lorsque l'échangeur de chaleur se trouve dans un milieu extérieur corrosif.

A cet effet, des tests SWAAT (*Sea Water Acidified Test*) ou des tests brouillard salin permettent de déterminer la résistance à l'étanchéité de l'échangeur de chaleur.

**L**e test SWAAT vise par exemple à alterner des phases dans lesquelles l'échangeur de chaleur est mis en contact sur sa face extérieure avec une solution saline, puis est soumis à des phases de mise en pression à une température élevée. La conduite de ce test est par exemple décrite par la norme **ASTM G85 Annexe 3.**

Bien que l'intégrité du joint d'étanchéité ne soit pas affectée, la solution saline se dépose sous le joint d'étanchéité, cristallise et soulève le joint d'étanchéité. Il en résulte une perte d'étanchéité de l'échangeur de chaleur provoquant des fuites, notamment depuis l'extérieur vers l'intérieur de l'échangeur.

Afin de tenter de surmonter cet inconvénient, les solutions existantes visent l'ajout d'un joint additionnel afin de réaliser une étanchéité extérieure supplémentaire. Toutefois, de telles solutions sont difficilement industrialisables à grande échelle. En effet, lors de la mise en place de la boite sur la plaque collectrice, le joint additionnel a tendance à ne pas rester en place. Il ne permet alors plus d'assurer la fonction d'étanchéité extérieure requise.

Le but de l'invention est de remédier au moins partiellement à cet inconvénient.

L'invention vise plus précisément à obtenir une étanchéité satisfaisante de l'échangeur de chaleur lorsque celui-ci se trouve dans un milieu corrosif.

A cet effet, selon l'invention, le collecteur comprend un joint secondaire d'étanchéité entre la boite et la plaque collectrice, le joint secondaire d'étanchéité étant situé à l'extérieur par rapport au joint principal d'étanchéité, la boite présentant en outre une cavité latérale, le joint secondaire d'étanchéité remplissant la cavité latérale et étant surmoulé sur le pourtour de la boite.

Le surmoulage du joint secondaire d'étanchéité permet une meilleure cohésion avec la boîte. Ceci permet d'éviter d'éventuelles fuites résultant d'un déplacement intempestif du joint secondaire lors de l'assemblage de la boite avec la plaque collectrice.

En particulier, des tests SWAAT réalisés sur un échangeur de chaleur comprenant un tel joint secondaire montre l'absence de dépôt de sel cristallisé sous le joint principal, ce qui permet donc d'obtenir une meilleure étanchéité.

Selon une réalisation, le joint secondaire d'étanchéité s'étend sur tout le pourtour de la boite.

Le joint secondaire d'étanchéité assure ainsi une étanchéité complète entre la plaque collectrice et la boite.

Selon une autre réalisation, le joint secondaire d'étanchéité présente sur une forme extérieure en biseau, le joint secondaire d'étanchéité présentant une largeur plus importante vers l'extérieur.

Selon une autre réalisation, le joint secondaire d'étanchéité a une forme extérieure bombée.

Selon une autre réalisation, la boite comprend un pied périphérique, le joint secondaire d'étanchéité est disposé sur une face latérale externe du pied périphérique.

Selon une autre réalisation, le joint secondaire d'étanchéité a une hauteur comprise entre 20% et 80% de la hauteur de la face latérale externe du pied périphérique.

Selon une autre réalisation, le joint secondaire d'étanchéité fait saillie depuis la face latérale externe du pied périphérique sur une épaisseur comprise entre deux et trois fois le jeu entre la boite et la plaque collectrice.

Selon une autre réalisation, la cavité latérale comprend une première partie et une seconde partie, la seconde partie formant un renfoncement qui s'étend depuis la première partie de la cavité latérale.

Selon une autre réalisation, la plaque collectrice est réalisée en métal, par exemple en aluminium, en alliage d'aluminium et/ou en acier inoxydable.

Selon une autre réalisation, la boite est en un matériau plastique, par exemple en polyamide (PA) ou en polypropylène (PP).

Selon une autre réalisation, le joint principal d'étanchéité et/ou le joint secondaire d'étanchéité est en un matériau polymère, par exemple en éthylène-propylène-diène monomère (EPDM) ou en silicone.

Dans la suite, on comprend les termes « interne », « externe », « intérieur », « extérieur », « avant », « arrière » en référence à la disposition des éléments par rapport à l'échangeur de chaleur une fois assemblé tel qu'illustré sur les figures. Les termes « interne » ou « avant » qualifient un élément relativement proche, tandis que les termes « externe » ou « arrière » qualifient un élément relativement plus éloigné.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés, dans lesquels :
- la figure 1 représente une vue éclatée en perspective d'un échangeur de chaleur selon l'invention ;
- la figure 2 représente une vue agrandie partielle de la boite de l'échangeur de chaleur de la figure 1 ;
- les figures 3A, 3B et 3C représentent une vue en coupe du pied périphérique de la boite selon le plan de coupe III-III de la figure 2 selon trois modes de réalisation différents ; et
- la figure 4 représente une vue en coupe partielle de la plaque collectrice et de la boite de la figure 1 une fois assemblés l'un à l'autre.

### Echangeur de chaleur

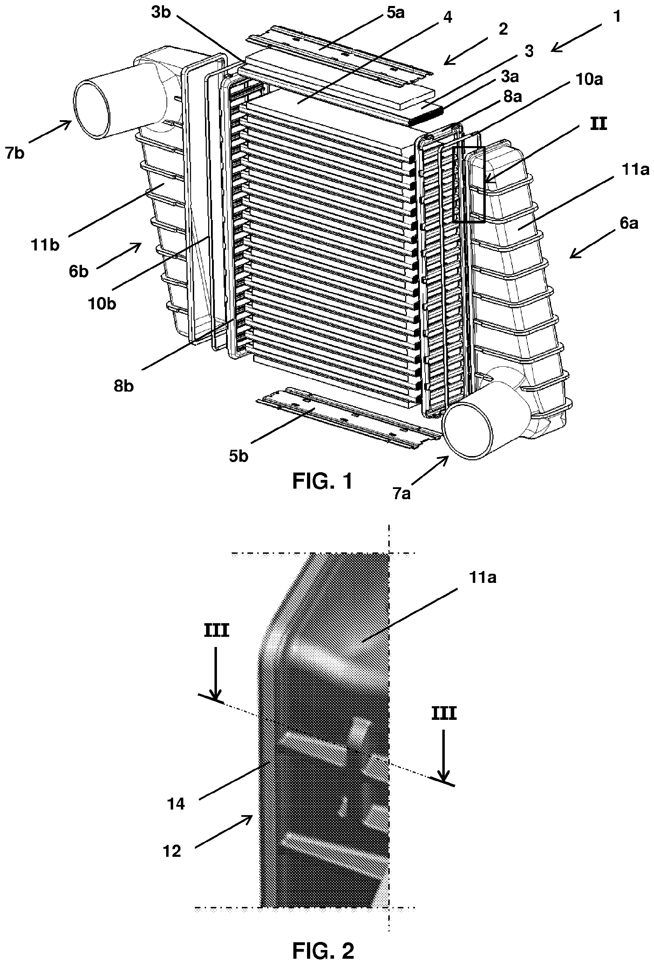

Comme illustrée sur la figure 1, l'invention concerne un échangeur de chaleur 1, en particulier pour véhicule automobile.

L'échangeur de chaleur 1 peut constituer un radiateur de refroidissement d'un moteur ou un radiateur de chauffage de l'habitacle du véhicule.

L'échangeur de chaleur 1 comprend un faisceau d'échange de chaleur 2 entre un premier et un second fluide.

Le premier fluide peut par exemple être de l'air de suralimentation destiné à alimenter le moteur du véhicule.

Le second fluide peut être un liquide de refroidissement, tel que dans un échangeur de chaleur air-eau (*WCAC - Water cooled Charge Air Cooler*)*.* Le second fluide peut également être de l'air, tel que dans un échangeur de chaleur air-air (*ACAC* - *Air cooled Charge Air Cooler*)*.*

Comme illustré à la figure 1, le faisceau d'échange de chaleur 2 comprend un empilement de tubes 3 permettant la circulation du second fluide.

Chacun des tubes 3 s'étend entre deux extrémités 3a, 3b. Les tubes 3 sont plats et de forme généralement rectangulaire.

Des intercalaires 4 sont disposés entre les tubes 3 et forment des ailettes d'échange de chaleur.

Deux plaques externes 5a, 5b sont disposées respectivement de part et d'autre de l'empilement de tubes 3 du faisceau d'échange de chaleur 2.

L'échangeur de chaleur 1 comprend en outre un collecteur d'entrée 6a et un collecteur de sortie 6b.

Les collecteurs d'entrée et de sortie 6a, 6b sont disposés respectivement de part et d'autre du faisceau d'échange de chaleur 2, en particulier au niveau des extrémités 3a, 3b des tubes 3.

Le collecteur d'entrée 6a comprend une ouverture 7a dans laquelle débouche un conduit de circulation d'entrée (non illustré). De la même façon, le collecteur de sortie 6b comprend une ouverture 7b dans laquelle débouche un conduit de circulation de sortie (non illustré).

Ainsi le premier fluide circule dans le collecteur d'entrée 6a, au voisinage du second fluide dans le faisceau d'échange de chaleur 2, puis dans le collecteur de sortie 6b.

Chaque collecteur 6a, 6b comprend une plaque collectrice 8a, 8b.

La plaque collectrice 8a, 8b est de préférence en métal, par exemple en aluminium, en alliage d'aluminium ou en acier inoxydable.

Comme illustrée sur la figure 1, la plaque collectrice 8a, 8b est destinée à recevoir les extrémités 3a, 3b des tubes 3 du faisceau d'échange de chaleur 2.

La plaque collectrice 8a, 8b est reliée au faisceau d'échange de chaleur 2, par exemple par brasage avec les différents tubes 3 qui le constituent.

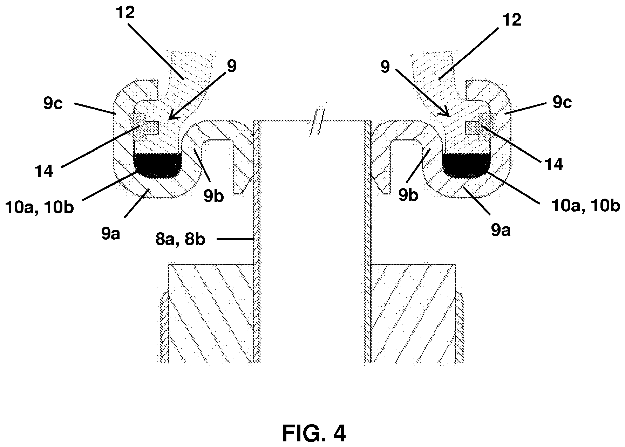

Comme illustré sur la figure 4, la plaque collectrice 8a, 8b comprend un bord périphérique 9 qui s'étend sur tout son pourtour.

Le bord périphérique 9 délimite une gorge ayant sensiblement un profil en U. La gorge comprend une paroi de fond 9a et deux parois latérales 9b, 9c, en particulier une paroi latérale interne 9b et une paroi latérale externe 9c. La paroi de fond 9a relie les deux parois latérales 9b, 9c entre elles.

Un joint principal d'étanchéité 10a, 10b est disposé dans la gorge du bord périphérique 9, en particulier contre la paroi de fond 9a. Le joint principal d'étanchéité 10a, 10b s'étend sur tout le pourtour de la plaque collectrice 8a, 8b.

Le joint principal d'étanchéité 10a, 10b est réalisé en un matériau polymère compressible, par exemple en éthylène-propylène-diène monomère (EPDM) ou en silicone.

Comme illustré sur la figure 1, chaque collecteur 6a, 6b comprend en outre une boite 11a, 11b.

La boite 11a, 11b est réalisée en un matériau plastique, par exemple en polyamide (PA) ou en polypropylène (PP). La boite 11a, 11b est de préférence réalisée par moulage.

La boite 11a, 11b est assemblée à la plaque collectrice 8a, 8b.

Comme illustrée sur la figure 2, la boite 11a comprend un pied périphérique 12 afin d'être rapportée sur la plaque collectrice 8a.

Comme illustré sur la figure 4, le pied périphérique 12 est configuré pour être reçu dans la gorge du bord périphérique 9 de la plaque collectrice 8a, 8b en assurant la compression du joint principal d'étanchéité 10a, 10b.

Le pied périphérique 12 est maintenu par sertissage avec le bord périphérique 9 de la plaque collectrice 8a, 8b.

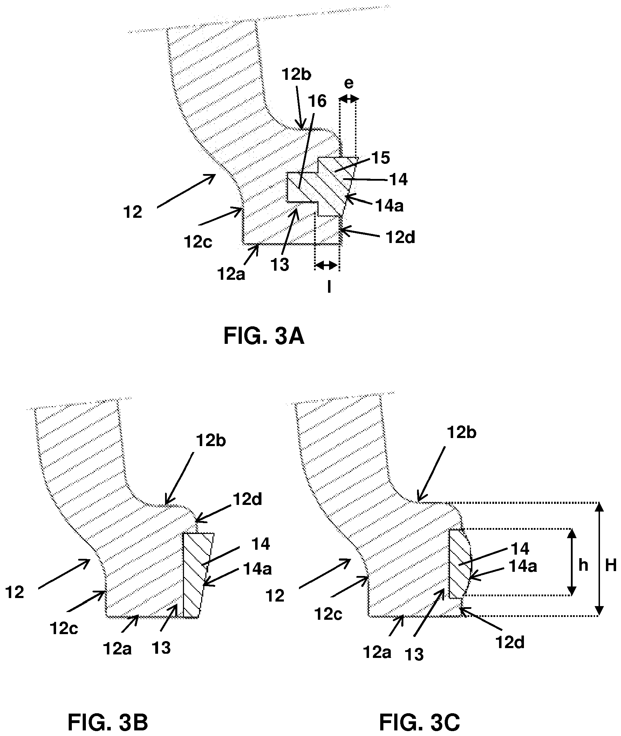

Comme illustré sur les figures 3A, 3B et 3C, le pied périphérique 12 comprend une face avant 12a configurée pour venir en contact avec le joint principal d'étanchéité 10a, 10b visible sur la figure 4.

Le pied périphérique 12 comprend en outre une face arrière 12b, une face latérale interne 12c, et une face latérale externe 12d. Les faces latérales interne et externe 12c, 12d sont configurées pour venir respectivement en regard, de préférence au contact, avec les parois latérales internes et externes 9b, 9c du bord périphérique 9 de la plaque collectrice 8a, 8b.

Le pied périphérique 12 comprend en outre une cavité latérale 13.

La cavité latérale 13 est située dans la face latérale externe 12d du pied périphérique 12. La cavité latérale 13 s'étend sur tout le pourtour de la boite 11a, 11b.

Un joint secondaire d'étanchéité 14 est disposé dans la cavité latérale 13 du pied périphérique 12.

Le joint secondaire d'étanchéité 14 s'étend dans la cavité latérale 13 sur tout le pourtour de la boite 11a, 11b, comme visible partiellement sur la figure 2. Le joint secondaire d'étanchéité 14 est ainsi situé à l'extérieur par rapport au joint principal d'étanchéité 10a, 10b.

Le joint secondaire d'étanchéité 14 est réalisé en un matériau polymère compressible, par exemple en éthylène-propylène-diène monomère (EPDM) ou en silicone. Le joint secondaire d'étanchéité 14 peut notamment être réalisé dans le même matériau que le joint principal d'étanchéité 10a, 10b. Le joint d'étanchéité secondaire 14 a par exemple une dureté comprise entre 25 et 80 shore A.

Le joint secondaire d'étanchéité 14 est surmoulé avec la boite 11.

En particulier, le joint secondaire d'étanchéité 14 est réalisé avec la boite 11a, 11b par bi-injection. Par bi-injection, on comprend que le joint secondaire d'étanchéité 14 et la boite 11a, 11b sont formés par injection de matière, simultanément ou successivement, lors d'une même opération de moulage. Le joint secondaire d'étanchéité 14 remplit ainsi totalement la cavité latérale 13 du pied périphérique 12.

De cette façon, le joint secondaire d'étanchéité 14 est solidaire de la boite 11a, 11b. Cela permet d'assurer un bon maintien du joint secondaire d'étanchéité 14 avec la boite 11a, 11b.

Une fois que la boite 11a, 11b est assemblée avec la plaque collectrice 8a, 8b, le joint secondaire d'étanchéité 14 est comprimé entre le pied périphérique 12 et le bord périphérique 9 (le joint secondaire d'étanchéité n'est pas représenté comme comprimé sur la figure 4).

Le joint secondaire d'étanchéité permet ainsi de combler le jeu existant entre la boite 11a, 11b et la plaque collectrice 8a, 8b une fois que ceux-ci sont assemblés l'un à l'autre.

A cet effet, le joint secondaire d'étanchéité 14 fait saillie sur une épaisseur e depuis la face latérale externe 12d du pied périphérique 12.

Le joint secondaire d'étanchéité 14 comprend en particulier une épaisseur e comprise entre deux et trois fois le jeu entre la boite 11a, 11b et la plaque collectrice 8a, 8b. L'épaisseur e est par exemple égale à 0,5 millimètre.

La compression du joint d'étanchéité secondaire 14 est au moins égale à 0,1 millimètre sur tout le pourtour de la boite 11a, 11b.

### Modes de réalisation du joint secondaire d'étanchéité

On décrit ci-après plus en détails les trois modes de réalisation du joint secondaire d'étanchéité 14 tels qu'illustrés respectivement par les figures 3A, 3B et 3C.

Selon le premier mode de réalisation illustré sur la figure 3A, la cavité latérale 13 comprend une première partie 15 et une seconde partie 16.

La première partie 15 de la cavité latérale 13 a par exemple une largeur l égale à 0,8 millimètres.

La seconde partie 16 forme un renfoncement depuis la première partie 15 de la cavité latérale 13. Ce renfoncement s'étend dans le pied périphérique 12. Le renfoncement permet ainsi un meilleur maintien du joint secondaire d'étanchéité 14 avec la boite 11a, 11b.

Selon les premier et deuxième modes de réalisation des figures 3A et 3B, le joint secondaire d'étanchéité 14 a une forme extérieure 14a en biseau. Ainsi, le joint secondaire d'étanchéité 14 s'étend de façon oblique par rapport à la face latérale externe 12d du pied périphérique 12. Le joint secondaire d'étanchéité 14 présente ainsi une largeur de préférence plus importante vers l'extérieur.

Selon le troisième mode de réalisation illustré sur la figure 3C, le joint secondaire d'étanchéité 14 a une forme extérieure 14a bombée.

Bien entendu, l'invention ne se limite pas à un joint secondaire d'étanchéité 14 ayant une géométrie spécifique telle qu'illustrée sur les figures 3A, 3B et 3C, et d'autres configurations sont tout à fait envisageables. De façon générale, le joint secondaire d'étanchéité 14 peut avoir une forme avantageusement quelconque selon l'invention permettant d'obtenir une étanchéité satisfaisante.

Le joint secondaire d'étanchéité 14 s'étend sur une hauteur h sur le pied périphérique 12. En particulier, le joint secondaire d'étanchéité 14 a une hauteur h comprise entre 20% et 80% de la hauteur H de la face latérale externe 12d du pied périphérique 12.

Selon les premier et troisième modes de réalisation des figures 3A et 3C, le joint secondaire d'étanchéité 14 est disposé sensiblement au centre de la face latérale externe 12d du pied périphérique 12.

Selon le deuxième mode de réalisation illustré sur la figure 3B, le joint secondaire d'étanchéité 14 s'étend depuis la face avant 12a du pied périphérique 12.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Echangeur de chaleur (1) comprenant :
- au moins un conduit de circulation d'un fluide,
- un collecteur (6a, 6b) dans lequel débouche le conduit de circulation, le collecteur (6a, 6b) comprenant une plaque collectrice (8a, 8b) et une boite (11a, 11b) rapportée sur la plaque collectrice (8a, 8b), et
- un joint principal d'étanchéité (10a, 10b) entre la boite (11a, 11b) et la plaque collectrice (8a, 8b),
le collecteur (6a, 6b) comprenant un joint secondaire d'étanchéité (14) entre la boite (11a, 11b) et la plaque collectrice (8a, 8b), le joint secondaire d'étanchéité (14) étant situé à l'extérieur par rapport au joint principal d'étanchéité (10a, 10b), la boite (11a, 11b) présentant en outre une cavité latérale (13), **caractérisé en ce que** le joint secondaire d'étanchéité (14) remplit la cavité latérale (13) et est surmoulé sur le pourtour de la boite (11a, 11b).

2. Echangeur de chaleur (1) selon la revendication 1, dans lequel joint secondaire d'étanchéité (14) s'étend sur tout le pourtour de la boite (11a, 11b).

3. Echangeur de chaleur (1) selon l'une quelconque des revendications précédentes, dans lequel le joint secondaire d'étanchéité (14) présente sur une forme extérieure (14a) en biseau, le joint secondaire d'étanchéité (14) présentant une largeur plus importante vers l'extérieur.

4. Echangeur de chaleur (1) selon l'une quelconque des revendications précédentes, dans lequel le joint secondaire d'étanchéité (14) a une forme extérieure (14a) bombée.

5. Echangeur de chaleur (1) selon l'une quelconque des revendications précédentes, dans lequel la boite (11a, 11b) comprend un pied périphérique (12), le joint secondaire d'étanchéité (14) étant disposé sur une face latérale externe (12d) du pied périphérique (12).

6. Echangeur de chaleur (1) selon la revendication 5, dans lequel le joint secondaire d'étanchéité (14) a une hauteur (h) comprise entre 20% et 80% de la hauteur (H) de la face latérale externe (12d) du pied périphérique (12).

7. Echangeur de chaleur (1) selon la revendication 5 ou 6, dans lequel le joint secondaire d'étanchéité (14) fait saillie depuis la face latérale externe (12d) du pied périphérique (12) sur une épaisseur (e) comprise entre deux et trois fois le jeu entre la boite (11a, 11b) et la plaque collectrice (8a, 8b).

8. Echangeur de chaleur (1) selon l'une quelconque des revendications précédentes, dans lequel la cavité latérale (13) comprend une première partie (15) et une seconde partie (16), la seconde partie (16) formant un renfoncement qui s'étend depuis la première partie (15) de la cavité latérale (13).

9. Echangeur de chaleur (1) selon l'une quelconque des revendications précédentes, dans lequel la plaque collectrice (8a, 8b) est en un matériau métal, par exemple en aluminium, en alliage d'aluminium et/ou en acier inoxydable.

10. Echangeur de chaleur (1) selon l'une quelconque des revendications précédentes, dans lequel la boite (11a, 11b) est en un matériau plastique, par exemple en polyamide (PA) ou en polypropylène (PP).

11. Echangeur de chaleur (1) selon l'une quelconque des revendications précédentes, dans lequel le joint principal d'étanchéité (10a, 10b) et/ou le joint secondaire d'étanchéité (14) est en un matériau polymère, par exemple en éthylène-propylène-diène monomère (EPDM) ou en silicone.

## Patentansprüche

1. Wärmetauscher (1), umfassend:
- mindestens eine Leitung für die Zirkulation eines Fluids,
- einen Kollektor (6a, 6b), in den die Zirkulationsleitung mündet, wobei der Kollektor (6a, 6b) eine Kollektorplatte (8a, 8b) und ein an der Kollektorplatte (8a, 8b) angebrachtes Gehäuse umfasst, und
- eine Hauptdichtung (10a, 10b) zwischen dem Gehäuse (11a, 11b) und der Kollektorplatte (8a, 8b),
wobei der Kollektor (6a, 6b) zwischen dem Gehäuse (11a, 11b) und der Kollektorplatte (8a, 8b) eine sekundäre Dichtung (14) umfasst, wobei sich die sekundäre Dichtung (14) in Bezug auf die Hauptdichtung (10a, 10b) außerhalb befindet, wobei das Gehäuse (11a, 11b) außerdem einen seitlichen Hohlraum (13) aufweist,
**dadurch gekennzeichnet, dass** die sekundäre Dichtung (14) den seitlichen Hohlraum (13) ausfüllt und an den Umfang des Gehäuses (11a, 11b) angeformt ist.

2. Wärmetauscher (1) nach Anspruch 1, wobei sich die sekundäre Dichtung (14) über den gesamten Umfang des Gehäuses (11a, 11b) erstreckt.

3. Wärmetauscher (1) nach einem der vorangehenden Ansprüche, wobei die sekundäre Dichtung (14) eine abgeschrägte Außenform (14a) aufweist, wobei die sekundäre Dichtung (14) nach außen hin eine größere Breite aufweist.

4. Wärmetauscher (1) nach einem der vorangehenden Ansprüche, wobei die sekundäre Dichtung (14) eine gewölbte Außenform (14a) aufweist.

5. Wärmetauscher (1) nach einem der vorangehenden Ansprüche, wobei das Gehäuse (11a, 11b) einen Umfangsfuß (12) umfasst, wobei die sekundäre Dichtung (14) an einer äußeren Seitenfläche (12d) des Umfangsfußes (12) angeordnet ist.

6. Wärmetauscher (1) nach Anspruch 5, wobei die sekundäre Dichtung (14) eine Höhe (h) zwischen 20 % und 80 % der Höhe (H) der äußeren Seitenfläche (12d) des Umfangsfußes (12) aufweist.

7. Wärmetauscher (1) nach Anspruch 5 oder 6, wobei die sekundäre Dichtung (14) von der äußeren Seitenfläche (12d) des Umfangsfußes (12) über eine Dicke (e) zwischen dem Zwei- und Dreifachen des Spiels zwischen dem Gehäuse (11a, 11b) und der Kollektorplatte (8a, 8b) vorsteht.

8. Wärmetauscher (1) nach einem der vorangehenden Ansprüche, wobei der seitliche Hohlraum (13) einen ersten Teil (15) und einen zweiten Teil (16) umfasst, wobei der zweite Teil (16) eine Vertiefung bildet, die sich vom ersten Teil (15) des seitlichen Hohlraums (13) aus erstreckt.

9. Wärmetauscher (1) nach einem der vorangehenden Ansprüche, wobei die Kollektorplatte (8a, 8b) aus einem Metallmaterial, beispielsweise aus Aluminium, einer Aluminiumlegierung und/oder rostfreiem Stahl, gebildet ist.

10. Wärmetauscher (1) nach einem der vorangehenden Ansprüche, wobei das Gehäuse (11a, 11b) aus einem Kunststoffmaterial, beispielsweise aus Polyamid (PA) oder Polypropylen (PP), gebildet ist.

11. Wärmetauscher (1) nach einem der vorangehenden Ansprüche, wobei die Hauptdichtung (10a, 10b) und/oder die sekundäre Dichtung (14) aus einem Polymermaterial, beispielsweise aus Ethylen-Propylen-Dien-Monomer (EPDM) oder aus Silikon, gebildet sind.

## Claims

1. Heat exchanger (1) comprising:
- at least one fluid circulation duct,
- a manifold (6a, 6b) into which the circulation duct leads, the manifold (6a, 6b) comprising a header plate (8a, 8b) and a header tank (11a, 11b) connected to the header plate (8a, 8b), and
- a main gasket (10a, 10b) between the header tank (11a, 11b) and the header plate (8a, 8b),
the manifold (6a, 6b) comprising a secondary gasket (14) between the header tank (11a, 11b) and the header plate (8a, 8b), the secondary gasket (14) being situated on the outside with respect to the main gasket (10a, 10b), the header tank (11a, 11b) also having a lateral cavity (13), **characterized in that** the secondary gasket (14) fills the lateral cavity (13) and is overmoulded on the perimeter of the header tank (11a, 11b).

2. Heat exchanger (1) according to Claim 1, wherein the secondary gasket (14) extends all around the perimeter of the header tank (11a, 11b).

3. Heat exchanger (1) according to either one of the preceding claims, wherein the secondary gasket (14) has a bevelled exterior shape (14a), the secondary gasket (14) having a width that is greater towards the outside.

4. Heat exchanger (1) according to any one of the preceding claims, wherein the secondary gasket (14) has a domed exterior shape (14a).

5. Heat exchanger (1) according to any one of the preceding claims, wherein the header tank (11a, 11b) comprises a peripheral foot (12), the secondary gasket (14) being disposed on an external lateral face (12d) of the peripheral foot (12).

6. Heat exchanger (1) according to Claim 5, wherein the secondary gasket (14) has a height (h) of between 20% and 80% of the height (H) of the external lateral face (12d) of the peripheral foot (12).

7. Heat exchanger (1) according to Claim 5 or 6, wherein the secondary gasket (14) protrudes from the external lateral face (12d) of the peripheral foot (12) over a thickness (e) of between two and three times the clearance between the header tank (11a, 11b) and the header plate (8a, 8b).

8. Heat exchanger (1) according to any one of the preceding claims, wherein the lateral cavity (13) comprises a first part (15) and a second part (16), the second part (16) forming an indentation that extends from the first part (15) of the lateral cavity (13).

9. Heat exchanger (1) according to any one of the preceding claims, wherein the header plate (8a, 8b) is made of a metal material, for example of aluminium, of aluminium alloy and/or of stainless steel.

10. Heat exchanger (1) according to any one of the preceding claims, wherein the header tank (11a, 11b) is made of a plastics material, for example of polyamide (PA) or of polypropylene (PP).

11. Heat exchanger (1) according to any one of the preceding claims, wherein the main gasket (10a, 10b) and/or the secondary gasket (14) is made of a polymer material, for example of ethylene propylene diene monomer (EPDM) or of silicone.
